# EUROPEAN PATENT APPLICATION

(11) **EP 4 641 817 A1**
(43) Date of publication of application: **29.10.2025**
(21) Application number: 24886433.2
(22) Date of filing: 31.10.2024
(51) Int. Cl.: H01M 50/538, B23K 26/21, H01M 10/04, H01M 50/169

(54) **WELDING STRUCTURE OF BATTERY CAN, CURRENT COLLECTING PLATE AND CAP, AND BATTERY CELL USING SAME**

(30) Priority: 02.11.2023 KR 20230149868
(71) Applicant: LG Energy Solution, Ltd., Seoul 07335 (KR)
(72) Inventor: HWANG, Dong-Sung, Daejeon 34122 (KR); KWON, Yong-Hwan, Daejeon 34122 (KR); PARK, Jeong-Ho, Daejeon 34122 (KR); CHO, Sung-Min, Daejeon 34122 (KR); HONG, Tae-Rim, Daejeon 34122 (KR)
(74) Representative: Goddar, Heinz J.
(86) International application number: PCT/KR2024/096455
(87) International publication number: WO 2025/095764

(57) **Abstract**

The present disclosure provides a welding structure of a battery can, a current collector plate and a cap, a battery cell utilizing the same, and a manufacturing method thereof. The current collector plate of the battery cell includes a body portion connected to an electrode tab of the electrode assembly, a can connection portion that is disposed radially further outward than the body portion and is connected to at least one of the side wall member and the cap, and a bridge whose radial inner side is connected to the body portion and whose radial outer side is connected to the can connection portion, and which extends radially. The bridge includes a first bending portion bent so that an extension direction of the bridge portion extending radially outward is directed to an axial outer side, a second bending portion bent so that an extension direction of the bridge portion extending axially outward is directed to a radial outer side, and an offset bridge portion whose radial inner side is connected to the first bending portion and whose radial outer side is connected to the second bending portion. Accordingly, the impact of the welding heat of the can and the cap on the electrode assembly through the current collector plate may be minimized.

## Description

### TECHNICAL FIELD

The present disclosure relates to a welding structure of a battery can, a current collector plate, and a cap, and a battery cell utilizing the same.

This application is based on and claims priority from Korean Patent Application No. 10-2023-0149868 filed on November 2, 2023, with the Korean Intellectual Property Office, the disclosure of which is incorporated herein in its entirety by reference.

### BACKGROUND ART

The process of manufacturing a battery cell utilizing a cylindrical can includes deep drawing a metal sheet to form a circular bottom portion and a circular tubular side wall member connected thereto, accommodating an electrode assembly therein, and then covering and finishing the open end of the side wall member with a cap.

Meanwhile, a current collector plate in contact with and electrically connected to the electrode tab of the electrode assembly is provided at an end of both axial ends of the electrode assembly facing the open end. The current collector plate is connected to the cap or the side wall member by welding or the like to be in contact with and electrically connected to the cap or the side wall member.

In closing the open end of the cylindrical can, a process of connecting the current collector plate to the cap or the side wall member and a process of connecting the cap to the side wall member are performed, respectively. This increase in labor work reduces the production efficiency of the cylindrical battery cell and increases the production unit cost.

To reduce the number of individual welding processes as such, a method of welding the side wall member, the cap, and the current collector plate at once may be considered. And, this welding may be performed by a laser.

However, it is not easy to assemble three parts (side wall member, cap, current collector plate) that are not fixed to each other firmly enough to be welded.

Additionally, when the side wall member, the cap, and the current collector plate are irradiated with a laser in a state where they are simply assembled, a gap may occur due to the tolerance of the individual parts of the side wall member, the cap, and the current collector plate, and the assembly error thereof. When the laser is irradiated for assembling them in a state where such a gap exists, the laser may penetrate directly into the can and cause damage to the electrode assembly accommodated inside the can. And, such tolerance may cause inaccurate assembly or deformation of the parts during the assembly process.

Meanwhile, when the melting point of the cap and the can is high, the welding portion should be heated to a temperature above the melting point in welding the cap and the can. And, the can, the cap, and the current collector plate are made of metals with high thermal conductivity. For this reason, the heat generated to weld the can and the cap may affect the electrode assembly accommodated inside the can, and thus there is a possibility of causing the electrode assembly or electrolyte to deteriorate during the welding process.

### DISCLOSURE

### Technical Problem

The present disclosure is designed to solve the problems of the related art, and therefore the present disclosure is directed to providing a welding structure of a battery can, a current collector plate, and a cap, which may allow the can, the current collector plate, and the cap to be easily assembled, may enable accurate alignment and close contact through abutting structure during the assembly process, and may suppress deformation of the parts during the assembly process and enable accurate assembly even if there is a dimensional tolerance of the parts, and a battery cell utilizing the same.

Additionally, the present disclosure is directed to providing a welding structure of a battery can, a current collector plate, and a cap, which may increase the energy density of a battery cell while minimizing the impact of heat generated during the welding process on components inside the battery cell, and a battery cell utilizing the same.

Additionally, the present disclosure is directed to providing a welding structure of a battery can, a current collector plate, and a cap, which may increase production efficiency of a cylindrical battery cell and lower production costs by integrating a process of welding the current collector plate to the can and a process of welding the cap to the side wall member into a single welding process, and a battery cell utilizing the same.

Additionally, the present disclosure is directed to providing a welding structure of a battery can, a current collector plate, and a cap, which may prevent the laser from directly penetrating into the can during the laser welding process even if there is a component tolerance and assembly error of the side wall member, the cap, and the current collector plate, and a battery cell utilizing the same.

Additionally, the present disclosure is directed to providing a welding structure of a battery can, a current collector plate, and a cap, which has shapes of the can, the current collector plate, and the cap and an interlocking relationship thereof that may secure weldability, increase process stability, and guarantee durability of welding, and a battery cell utilizing the same.

The technical problems of the present disclosure are not limited to the above-described objects, and other objects and advantages of the present disclosure not mentioned herein may be understood by the following description, and will be more clearly understood by the embodiments of the present disclosure. Additionally, it will be easily understood that the objects and advantages of the present disclosure may be realized by the means and combinations thereof indicated in the claims.

### Technical Solution

The present disclosure for solving the above-described problem may be applied to a battery cell including an electrode assembly, a current collector plate electrically connected to the electrode assembly, and a can accommodating the electrode assembly and the current collector plate.

The can includes a side wall member extending axially, and an open end provided at one axial end of the side wall member.

The battery cell includes a cap covering the open end.

A bottom member is connected to the other axial end of the side wall member, and thus the other axial end of the side wall member may form a closed end.

The electrode assembly may be in the form of a jelly-roll wound around a predetermined axis.

An electrode tab is provided at one of both axial ends of the electrode assembly corresponding to the open end, and the current collector plate may be electrically connected to the electrode tab.

The current collector plate includes a body portion that is in contact with and electrically connected to the electrode tab.

The body portion may include an electrode tab connection portion that is bonded to the electrode tab.

The bonding of the electrode tab connection portion and the electrode tab may be accomplished by welding, brazing, or soldering. Preferably, the bonding may be accomplished by laser welding in which a laser is irradiated onto the surface of the electrode tab connection portion.

The body portion may include an inner ring portion that is connected to the electrode tab connection portion on a radial inner side of the electrode tab connection portion.

The current collector plate includes a can connection portion that is electrically connected to at least one of the side wall member and the cap.

The can connection portion and the body portion may be electrically connected.

The can connection portion may be disposed radially further outward than the body portion.

The current collector plate includes a bridge whose radial inner side is connected to the body portion and whose radial outer side is connected to the can connection portion, and which extends radially.

The bridge includes a first bending portion, an offset bridge portion, and a second bending portion in order from an inner side to an outer side in a radial direction.

The first bending portion is bent so that an extension direction of the bridge portion extending radially outward is directed to an axial outer side.

The offset bridge portion has a radial inner side connected to the first bending portion and a radial outer side connected to the second bending portion.

The second bending portion is bent so that an extension direction of the bridge portion extending axially outward is directed to a radial outer side.

The body portion may be disposed axially further inward than the can connection portion. That is, the can connection portion may be disposed axially further outward than the body portion.

Accordingly, an axial distance between the can connection portion and the electrode assembly may be further secured.

The bridge may further include an inner bridge portion whose radial inner side is connected to the body portion and whose radial outer side is connected to the first bending portion.

The bridge may further include an outer bridge portion whose radial inner side is connected to the second bending portion and whose radial outer side is connected to the can connection portion.

The inner bridge portion may be disposed axially further inward than the outer bridge portion. That is, the outer bridge portion may be disposed axially further outward than the inner bridge portion.

An angle formed by an extension direction of the outer bridge portion and a radial direction may be 10 degrees or less. Preferably, the extension direction of the outer bridge portion may be parallel to the radial direction.

Accordingly, an axial distance between the can connection portion and the outer bridge portion and the electrode assembly may be further secured.

A bending angle of the first bending portion may be an acute angle.

The offset bridge portion may extend axially outward as it extends radially outward. That is, the offset bridge portion may extend at an angle.

The degree to which the offset bridge portion is inclined with respect to an axial direction may be 0 degrees or more and less than 90 degrees.

The bending angle of the second bending portion may be an acute angle.

A difference between the bending angle of the first bending portion and the bending angle of the second bending portion may be 10 degrees or less. Accordingly, a space occupied by the inner bridge portion and the outer bridge portion in the axial direction may be minimized.

The can connection portion may include an axial extension portion that extends axially from a radial outer end.

The can connection portion may include a radial extension portion that extends radially.

The axial extension portion may be connected to the radial extension portion through a bending portion.

The bending portion may bend the radial extension portion that extends radially outward axially outward.

The axial extension portion of the can connection portion may extend axially outward from the bending portion.

The can connection portion may have an abutting outer circumferential surface defined by an outer circumference of the can connection portion.

The abutting outer circumferential surface may be defined by the outer circumferential surface of the axial extension portion.

The abutting outer circumferential surface may radially face an inner circumferential surface of the side wall member.

At least a portion of the abutting outer circumferential surface in an axial direction may define a first section that radially contacts an inner circumferential surface of the side wall member.

The can connection portion may have a cap abutting surface defined by an axial outer end surface.

The cap abutting surface may be defined by a front end surface of the axial extension portion.

The cap abutting surface may axially face and contact an inner surface of the cap.

The cap may include a bonding outer circumferential surface that radially faces an inner circumferential surface of the side wall member.

The bonding outer circumferential surface may radially contact an inner surface of the side wall member.

The cap may have a current collector plate abutting surface defined by an axial inner surface.

The current collector plate abutting surface may axially face and contact the cap abutting surface of the can connection portion of the current collector plate.

The bonding outer circumferential surface of the cap may be disposed axially further outward than the current collector plate abutting surface.

The bonding outer circumferential surface of the cap may be disposed radially further outward than the current collector plate abutting surface.

The cap may have a pressing surface that contacts the current collector plate and presses the current collector plate radially outward. Accordingly, the current collector plate may be brought into close contact with an inner circumferential surface of the side wall member in a radial direction.

At least a portion of the inner circumferential surface of the side wall member and at least a portion of the abutting outer circumferential surface of the current collector plate may be bonded.

At least a portion of the inner circumferential surface of the side wall member and at least a portion of the bonding outer circumferential surface of the cap may be bonded. Preferably, the bonding outer circumferential surface of the cap may be bonded to the inner circumferential surface of the side wall member as a whole.

At least a portion of the cap abutting surface of the current collector plate and at least a portion of the current collector plate abutting surface of the cap may be bonded.

The bonding may be performed by welding.

The side wall member, the cap, and the current collector plate may be triple-welded together.

The triple-welding can be performed by welding together at least a portion of the side wall member, at least a portion of the cap, and at least a portion of the can connection portion of the current collector plate.

The welding may be performed by a laser irradiated in an axial direction onto an abutting part of an inner circumferential surface of the side wall member and a bonding outer circumferential surface of the cap.

At least a portion of the inner circumferential surface of the side wall member, at least a portion of the bonding outer circumferential surface of the cap, and at least a portion of the can connection portion of the current collector plate may be welded together and bonded.

An outer diameter of at least a portion of the abutting outer circumferential surface in an axial direction may be larger than an inner diameter of an inner circumferential surface of the side wall member facing the section in a radial direction.

An outer diameter of a first section of the abutting outer circumferential surface may be larger than an inner diameter of an inner circumferential surface of the side wall member facing it in a radial direction. Accordingly, when the current collector plate is inserted into the can, the first section of the abutting outer circumferential surface of the current collector plate may be forcibly press-fitted into the side wall member.

The battery cell may include a welding portion in which the inner circumferential surface of the side wall member, the bonding outer circumferential surface of the cap, and the can connection portion of the current collector plate are welded together.

The bonding outer circumferential surface of the cap and the abutting outer circumferential surface of the can connection portion may each face the inner circumferential surface of the side wall member in a radial direction.

The bonding outer circumferential surface of the cap and the abutting outer circumferential surface of the can connection portion may each contact the inner circumferential surface of the side wall member in a radial direction.

Axial ends of the bonding outer circumferential surface of the cap and the inner circumferential surface of the side wall member, which face or abut each other in a radial direction, may be exposed axially outward.

The welding portion may be formed by a laser irradiated radially from the axial outer side of the battery cell toward axial ends of the bonding outer circumferential surface of the cap and the inner circumferential surface of the side wall member.

According to the present disclosure, since the first section of the abutting outer circumferential surface of the current collector plate disposed axially further inward than the cap faces and contacts the inner circumferential surface of the side wall member, the laser may be prevented from being directly irradiated into an inner space of the can.

The current collector plate may have higher thermal conductivity than the side wall member. Accordingly, welding heat is quickly dispersed to the electrode assembly through the current collector plate, and thus the phenomenon of the welding heat being transferred to the outer circumferential surface of the electrode assembly through the side wall member and damaging a separator provided on the outer circumferential surface of the electrode assembly may be prevented.

In a bridge connecting a body portion of the current collector plate and a can connection portion, a part disposed close to the can connection portion is axially spaced apart from the electrode assembly. In addition, the can connection portion is also axially spaced apart from the electrode assembly.

Accordingly, when welding is performed, the can connection portion and the outer bridge portion may be allowed to be further spaced apart axially from the electrode assembly in the current collector plate, which has a relatively higher temperature as moving from the body portion to the can connection portion, thereby preventing the electrode assembly from being damaged by the high temperature welding heat.

An inner diameter expansion portion may be provided on one axial end of the side wall member.

A first inner circumferential surface of the side wall member provided axially further inward than the inner diameter expansion portion may have a smaller inner diameter than a second inner circumferential surface of the side wall member provided axially further outward than the inner diameter expansion portion.

The inner diameter expansion portion may have a shape that expands the inner diameter of the side wall member toward an axial outer side.

The inner diameter expansion portion may include an inclined surface shape provided on the inner surface of the side wall member and extending radially outward toward an axial outer side.

The inner diameter expansion portion may block an internal penetration of a laser that may be irradiated into a gap between the side wall member and the cap or the current collector plate.

At least a portion of the first section of the abutting outer circumferential surface may be axially in contact with the first inner circumferential surface.

At least a portion of the first section of the abutting outer circumferential surface may also be axially in contact with the inner diameter expansion portion.

At least a portion of the first section of the abutting outer circumferential surface may also be axially in contact with the second outer circumferential surface.

An outer diameter of the first section of the abutting outer circumferential surface may be larger than an inner diameter of the first inner circumferential surface.

An outer diameter of the abutting outer circumferential surface of the can connection portion of the current collector plate may be larger than an inner diameter of the first inner circumferential surface.

A material of the current collector plate may be softer than a material of the side wall member.

If the outer diameter of the abutting outer circumferential surface is set to be slightly larger than the inner diameter of the first inner circumferential surface, the abutting outer circumferential surface may be press-fitted into the first inner circumferential surface during the process of inserting the current collector plate, so that the abutting outer circumferential surface and the first inner circumferential surface may be in a radially close contact with each other.

As a result, in a state where the current collector plate is inserted, the outer diameter of the first section of the abutting outer circumferential surface in contact with the first inner circumferential surface may correspond to the inner diameter of the first inner circumferential surface.

A curved surface whose outer diameter decreases gradually toward an axial inner side of the cap connection portion may be provided axially further inward than the cap connection portion by the bending portion.

A minimum outer diameter of the curved surface may be smaller than an inner diameter of the first inner circumferential surface.

Accordingly, the forced press-fitting of the cap connection portion to the first inner circumferential surface may be guided during the process of inserting the current collector plate.

The first inner circumferential surface of the side wall member into which the first section of the abutting outer circumferential surface is forcibly press-fitted may be disposed axially closer to the bending portion than the second inner circumferential surface of the side wall member.

The bonding outer circumferential surface of the cap may radially face the second inner circumferential surface.

The abutting outer circumferential surface of the can connection portion may radially face the second inner circumferential surface at a position axially further inward than the bonding outer circumferential surface.

The bonding outer circumferential surface of the cap and the abutting outer circumferential surface of the can connection portion of the current collector plate may each contact the second inner circumferential surface.

An outer diameter of the abutting outer circumferential surface may correspond to or be smaller than an inner diameter of the second inner circumferential surface.

The cap may have a cap body, a thickness reduction portion, and a bonding portion in order from a center to an outer side in a radial direction.

In other words, the thickness reduction portion may be provided on a radial outer side of the cap body, and the bonding portion may be provided on a radial outer side of the thickness reduction portion.

The bonding outer circumferential surface of the cap may be provided on the bonding portion.

The first thickness may be a thickness of the bonding portion measured in the axial direction.

The first thickness may be smaller than a second thickness of the cap body measured in the axial direction.

This increases the second thickness of the cap body, which accounts for the overall shape of the cap, to minimize deformation of the cap due to the internal pressure of the can, and also to suppress the axial dimension of a welding portion for the side wall member, that is, the bonding outer circumferential surface, so that the welding portion is formed over the entire axial direction of the bonding outer circumferential surface, thereby increasing both the strength of the cap itself and the coupling strength of the cap to the side wall member.

The thickness reduction portion may be provided on an axial inner surface of the cap.

If at least a portion of the thickness reduction portion may contact the current collector plate by appropriately selecting the position where the thickness reduction portion is provided, it is possible to achieve the effect of aligning the center of the cap while the thickness reduction portion of the cap is in contact with the current collector plate during the process of inserting the cap.

To enhance this alignment effect, the thickness reduction portion may include an inclined surface shape that extends axially outward toward a radial outer side.

The thickness reduction portion and the binding portion may be formed by forging.

As the cap is inserted, a radial inner edge of the axial outer end of the cap connection portion of the current collector plate may contact an inclined surface of the thickness reduction portion.

Accordingly, the center of the cap and the center of the current collector plate may be aligned, and the axial outer end of the cap connection portion of the current collector plate may be pressed radially outward to be closer to or in close contact with the second inner circumferential surface of the side wall member.

The pressing surface of the cap may be implemented by the inclined surface.

The present disclosure provides a method for manufacturing the above-described battery cell.

The battery cell may include a can including a bottom member, a side wall member connected to the bottom member and extending axially, and an open end provided at one axial end of the side wall member, a cap covering the open end, and an electrode assembly accommodated inside the can.

A method for manufacturing such a battery cell includes a first step of bonding a current collector plate to an electrode tab provided at an end of both axial ends of the electrode assembly corresponding to the open end.

The manufacturing method includes a second step of inserting the current collector plate into the can and bringing a first section, which is at least an axial portion of an abutting outer circumferential surface of a can connection portion provided on a radial outer edge of the current collector plate, into contact with an inner circumferential surface of the side wall member.

At this time, the can connection portion of the current collector plate may be forcibly press-fitted into a first inner circumferential surface that is disposed axially further inward than an inner diameter expansion portion of the side wall member, thereby increasing the adhesion between the first inner circumferential surface and the bonding outer circumferential surface of the current collector plate.

The manufacturing method includes a third step of covering an open end of the side wall member with a cap and bringing a radial outer edge of the cap into contact with at least one of the side wall member and the can connection portion of the current collector plate.

Specifically, in the third step, the bonding outer circumferential surface provided on the edge of the cap and the current collector plate abutting surface may be brought into contact with the inner circumferential surface of the side wall member and the cap abutting surface of the current collector plate, respectively.

At this time, a thickness reduction portion in the form of an inclined surface provided on the axial inner surface of the cap may be brought into contact with the current collector plate to align the center of the cap and/or the axial outer end of the cap abutting surface of the current collector plate may be pressed radially outward to bring it closer to or into close contact with the second inner circumferential surface of the side wall member.

The manufacturing method includes a fourth step of welding the side wall member, the cap, and the can connection portion of the current collector plate together by irradiating a laser to the side wall member, the cap, and the can connection portion of the current collector plate.

Specifically, in the fourth step, a laser is axially irradiated from the axial outer side to an abutting part of the inner circumferential surface of the side wall member and the bonding outer circumferential surface of the cap, so that the inner circumferential surface of the side wall member, the bonding outer circumferential surface of the cap, and the can connection portion of the current collector plate may be welded together.

### Advantageous Effects

According to the present disclosure, the radial elastic structure of the bridge having the first bending portion and the second bending portion may allow the can, the current collector plate, and the cap to be easily assembled, may enable accurate alignment and close contact through abutting structure during the assembly process, and may suppress deformation of the parts during the assembly process and enable accurate assembly even if there is a dimensional tolerance of the parts.

According to the present disclosure, the geometric structure of the bridge having the first bending portion and the second bending portion may allow the can connection portion of the current collector plate to be axially spaced apart from the electrode assembly to minimize the impact of heat generated during the process of welding the can and the cap on components inside the battery cell, thereby further securing the axial volume of the electrode assembly, resulting in increasing the energy density of the battery cell.

According to the present disclosure, through the forced press fit structure of the abutting outer circumferential surface of the current collector plate against the inner circumferential surface of the side wall member, the alignment of the side wall member and the current collector plate and the adhesion of the part to be welded between the side wall member and the current collector plate may be secured, and the adhesion part may prevent the laser irradiated axially for welding from being irradiated into the can.

According to the present disclosure, the cap connection portion of the current collector plate is formed long axially, so that even if a portion of the laser irradiated axially for welding penetrates into the gap between the cap connection portion and the side wall member, the laser may be prevented from being directly irradiated into the inner space of the can.

According to the present disclosure, by forming an inner diameter expansion portion on the inner circumferential surface of the side wall member to provide a first inner diameter portion and a second inner diameter portion having different inner diameters, and by forcibly press-fitting the cap connection portion of the current collector plate into a section of the first inner diameter portion that is positioned further inward axially and has a smaller inner diameter, the pressing force between the current collector plate and the side wall member may be concentrated on the corresponding part while lowering the pressing force required during assembly, thereby securing close contact therebetween.

According to the present disclosure, the inner diameter expansion portion of the side wall member functions as a barrier that blocks laser penetration irradiated axially for welding, thereby reliably preventing the laser from being directly irradiated into the can.

According to the present disclosure, a portion of the axial section of the cap connection portion close to the bending portion is forcibly press-fitted into the first inner diameter portion, so that the radial support force of the bending portion and the electrode tab connection portion for the forced press fit portion may be further secured.

According to the present disclosure, the curved surface provided by the bending portion of the current collector plate may guide the forced press fit of the current collector plate during the process of inserting the current collector plate into the side wall member, thereby increasing the convenience of assembly.

According to the present disclosure, since the cap is inserted to a position where the axial inner surface of the cap contacts the axial outer end of the cap connection portion of the current collector plate, the insertion depth of the cap may be regulated through the axial extension length of the cap connection portion, thereby increasing assembly accuracy.

According to the present disclosure, during the process of inserting the cap, the inclined surface provided in the thickness reduction portion of the cap contacts the cap connection portion of the current collector plate, and the center of the cap may be aligned with respect to the center of the current collector plate, thereby improving the convenience of assembly.

According to the present disclosure, as the cap is inserted, the axial outer end of the cap connection portion of the current collector plate may be pressed radially outward by the inclined surface of the thickness reduction portion of the cap, and accordingly, the axial outer end of the cap connection portion may be brought closer to, into contact with, or into close contact with the second inner circumferential surface of the side wall member. Accordingly, the adhesion of the welding portion may be improved.

According to the present disclosure, weldability for welding the side wall member, the cap, and the current collector plate together may be secured.

According to the present disclosure, process stability for welding the side wall member, the cap, and the current collector plate together may be secured.

According to the present disclosure, the assembly work of the battery cell may be significantly reduced by welding the side wall member, the cap, and the current collector plate together.

In addition to the above-described effects, the specific effects of the present disclosure will be described together while describing specific matters for carrying out the disclosure below.

### DESCRIPTION OF DRAWINGS

FIG. 1 is a perspective view of a cylindrical battery cell of an embodiment.
FIG. 2 is an exploded perspective view of an electrode assembly accommodated inside the can of FIG. 1 before winding.
FIG. 3 is a perspective view of the electrode assembly of FIG. 2 in a stacked state before winding.
FIG. 4 is a perspective view of a state in which an electrode assembly in the form of a cylindrical jelly-roll is assembled by winding the stack of FIG. 3.
FIG. 5 is a perspective view showing a state in which a first current collector plate is bonded to an electrode tab of a first electrode of an electrode assembly.
FIG. 6 is a perspective view showing a state in which a second current collector plate is bonded to an electrode tab of a second electrode of an electrode assembly.
FIG. 7 is a perspective view of the second current collector plate of FIG. 6.
FIG. 8 is a cross-sectional view taken along line 8-8 of FIG. 7.
FIG. 9 is a cross-sectional view taken along line 9-9 of FIG. 7.
FIG. 10 is a perspective view showing a portion of the cross-section of FIG. 8.
FIG. 11 is a side cross-sectional view showing a process of accommodating an electrode assembly to which a current collector plate is bonded inside a can.
FIG. 12 is a side cross-sectional view showing a process of bonding a first current collector plate and a first electrode terminal of an electrode assembly accommodated in a can.
FIG. 13 is a side cross-sectional view showing a process of covering an open end of the can in which an electrode assembly is accommodated with a cap.
FIGS. 14 and 15 are side cross-sectional views showing a process of closing an injection port of a cap that is bonded to a side wall member of a can and closes an open end with a stopper.
FIG. 16 is an enlarged cross-sectional view showing a region where a dash-double dotted line is indicated in an open end of the battery cell of FIG. 15, and is a view showing a process of inserting a cap in a state where an electrode assembly is accommodated and a current collector plate is inserted inside a can.
FIG. 17 is a view showing a state in which the cap is inserted in FIG. 16.
FIG. 18 is an enlarged view showing the abutting part of the side wall member, the current collector plate, and the cap in FIG. 17.

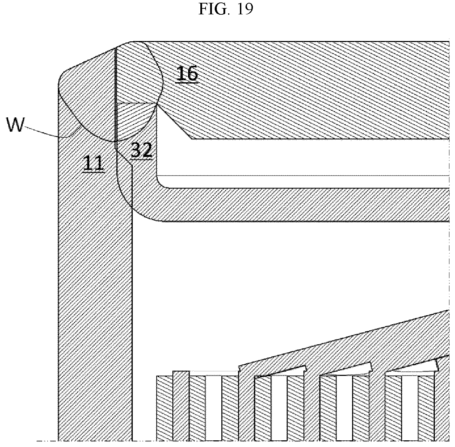

FIG. 19 is a view showing a state in which a welding portion is formed by welding the side wall member, the current collector plate, and the cap portion in FIG. 17.
FIGS. 20 and 21 are flow charts of a battery cell manufacturing process according to the present disclosure, wherein FIG. 20 is a flow chart of a battery cell manufacturing process utilizing a cap provided with an injection port, and FIG. 21 is a flow chart of a battery cell manufacturing process utilizing a cap without an injection port.
FIGS. 22 and 23 show a battery pack to which a battery cell of an embodiment is applied and a vehicle to which such a battery pack is mounted.

### BEST MODE

The above-described objects, features, and advantages will be described in detail later with reference to the accompanying drawings, which will enable those having ordinary skill in the technical field pertaining to the present disclosure to easily carry out the technical ideas of the present disclosure. When it is judged that a detailed description of a known technology related to the present disclosure may unnecessarily obscure the gist of the present disclosure in describing the present disclosure, such a detailed description thereof will be omitted. Hereinafter, a preferred embodiment according to the present disclosure will be described in detail with reference to the accompanying drawings. In the drawings, the same reference numerals are used to indicate the same or similar components.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it means A, B or A and B, unless expressly stated to the contrary, and when referring to "C to D", it means C or more and D or less, unless expressly stated to the contrary.

In describing the embodiments, the term axial direction refers to a direction in which an axis forming a winding center of the j elly-roll type electrode assembly extends, the term radial direction refers to a direction approaching to (centripetal) or moving away from (centrifugal) the axis, and the term circumferential (circumference) direction refers to a direction surrounding the axis.

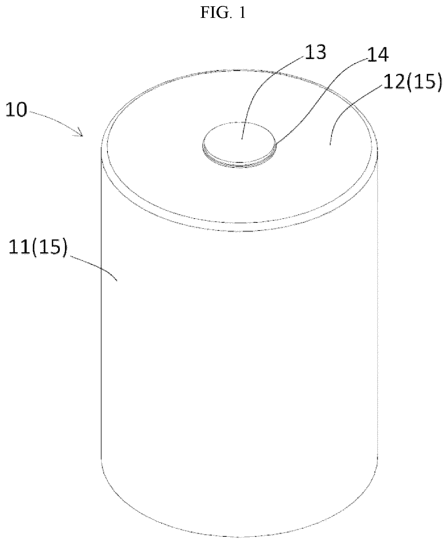

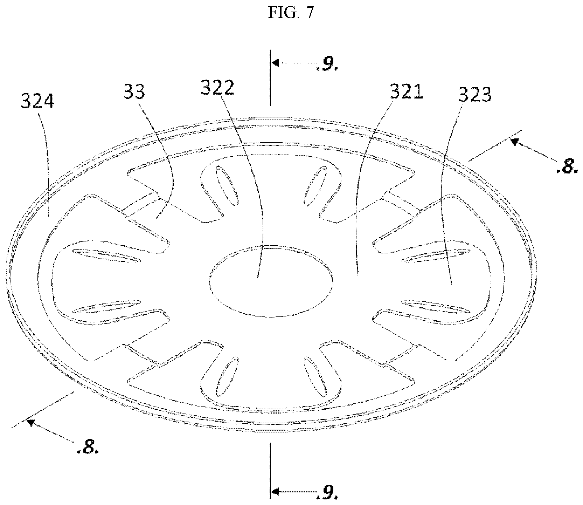

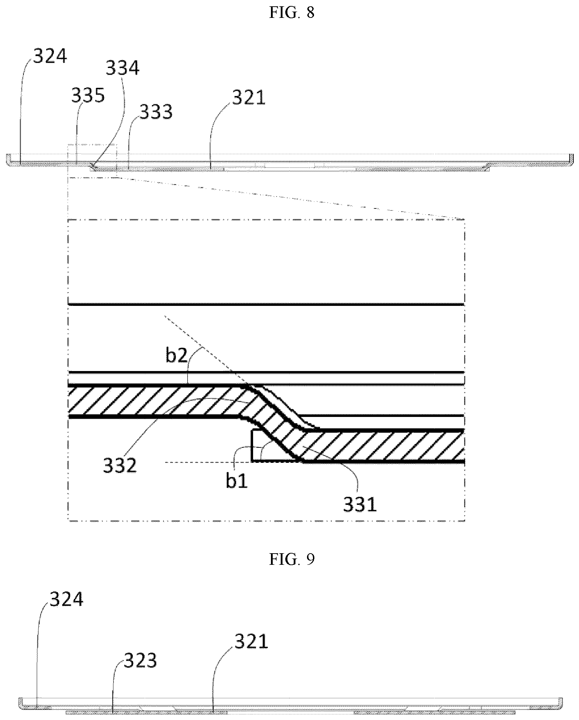

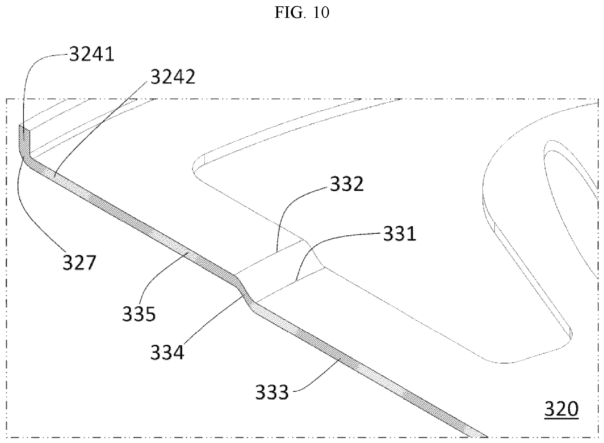

Hereinafter, with reference to FIGS. 1 to 17, an embodiment of a battery cell to which a welding structure of the present disclosure is applied will be described in detail.

The battery cell of the embodiment may be, for example, a cylindrical battery cell having a form factor ratio (defined as a value obtained by dividing a diameter of the cylindrical battery cell by a height, that is, a ratio of the diameter Φ to the height H) greater than approximately 0.4.

Here, the form factor refers to a value representing the diameter and height of the cylindrical battery cell. The cylindrical battery cell may be, for example, a 46110 cell, a 48750 cell, a 48110 cell, a 48800 cell, or a 46800 cell. In the numerical value indicating the form factor, the first two numbers indicate the diameter of the cell, the next two numbers indicate the height of the cell, and the last number 0 indicates that the cross-section of the cell is circular.

The battery cell may be a cylindrical battery cell having an approximately cylindrical shape with a diameter of approximately 46 mm, a height of approximately 110 mm, and a form factor ratio of 0.418.

A battery cell according to another embodiment may be a cylindrical battery cell having an approximately cylindrical shape with a diameter of approximately 48 mm, a height of approximately 75 mm, and a form factor ratio of 0.640.

A battery cell according to still another embodiment may be a cylindrical battery cell having an approximately cylindrical shape with a diameter of approximately 48 mm, a height of approximately 110 mm, and a form factor ratio of 0.418.

A battery cell according to still another embodiment may be a cylindrical battery cell having a substantially cylindrical shape with a diameter of approximately 48 mm, a height of approximately 80 mm, and a form factor ratio of 0.600.

A battery cell according to still another embodiment may be a cylindrical battery cell having a substantially cylindrical shape with a diameter of approximately 46 mm, a height of approximately 80 mm, and a form factor ratio of 0.575.

It should be noted that the present disclosure may also be applied to battery cells having a form factor ratio of approximately 0.4 or less, such as an 18650 cell, a 21700 cell, and the like. In the case of an 18650 cell, the diameter is approximately 18 mm, the height is approximately 65 mm, and the form factor ratio is 0.277. In the case of a 21700 cell, the diameter is approximately 21 mm, the height is approximately 70 mm, and the form factor ratio is 0.300.

The battery cell of the embodiment includes an electrode assembly 20, current collector plates 31, 32 electrically connected to the electrode assembly 20, and a can 10 that accommodates the electrode assembly 20 and the current collector plates 31, 32.

The can 10 includes a bottom member 12, a side wall member 11 connected to the bottom member 12 and extending in the axial direction, and an open end provided at one axial end of the side wall member 11.

The can 10 includes a cap 16 covering the open end.

The bottom member 12 may have a disk shape with a hole formed in the center, and the side wall member 11 may have a circular tubular shape.

The bottom member 12 and the side wall member 11 may be manufactured by molding a metal sheet with nickel plating on the surface of steel by a deep drawing process, and trimming the front end of the side wall member 11 with a punch while gripping it with a blank holder. Of course, the material of the can 10 is not limited thereto.

A first electrode terminal 13 may be fitted into the hole. The first electrode terminal 13 may be riveted and fixed to the bottom member 12 with a gasket 14 interposed therebetween. The gasket 14 may be interposed between the first electrode terminal 13 and the bottom member 12 to seal the inside and outside of the can 10 to prevent leakage of an electrolyte, and to electrically insulate the first electrode terminal 13 from the bottom member 12.

However, the connection method between the first electrode terminal 13 and the bottom member 12 is not limited thereto. For example, as long as the structure is capable of providing sealing between the first electrode terminal 13 and the bottom member 12 and electrically insulating the first electrode terminal 13 from the bottom member 12, various other fixing methods, such as a bolt-nut coupling method, a glass seal method, or a chrome coating & PP-MAH thermal bonding method, may also be applied.

The first electrode terminal 13 may have a first polarity, and the can 10 may have a second polarity. That is, the bottom member 12 of the can 10, the side wall member 11 connected thereto, and the cap 16 connected to the side wall member 11, which will be described later, may all have a second polarity.

Accordingly, the battery cell may have both the first electrode terminal 13 and the second electrode terminal 15 disposed at the axial end, that is, the closed end, provided with the bottom member 12. Then, the battery cell may have both a busbar connected to the first electrode terminal 13 and a busbar connected to the second electrode terminal 15 positioned at the top of the battery cell.

In one example, the first electrode terminal 13 may be a positive electrode terminal, and the second electrode terminal 15 may be a negative electrode terminal. Of course, the opposite may also be true.

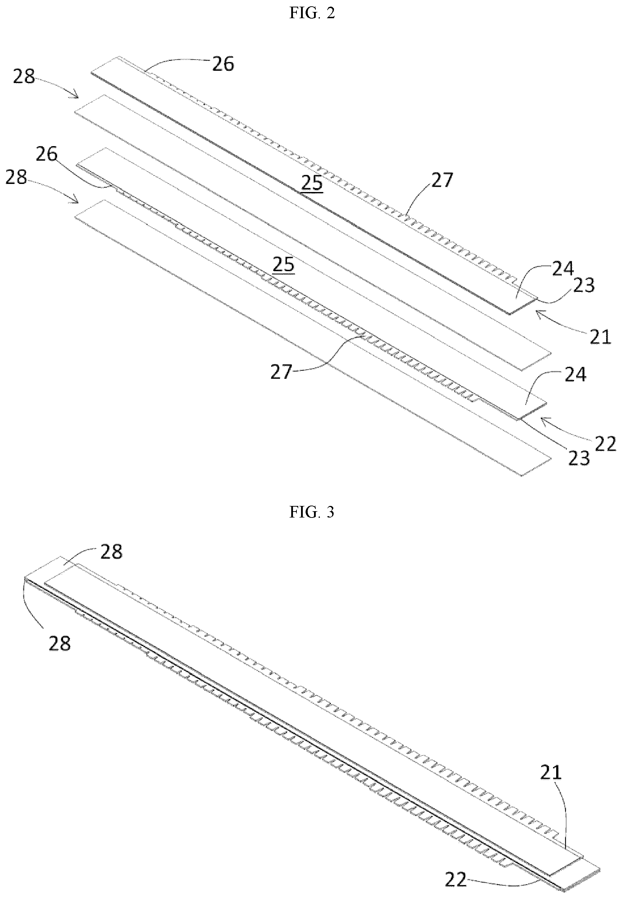

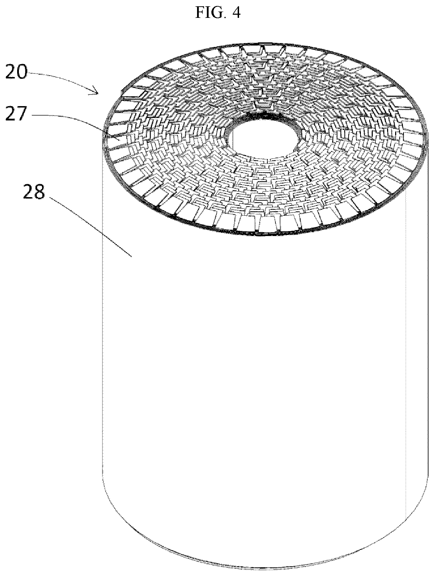

An electrode assembly 20 is accommodated within the can 10. The electrode assembly 20 is manufactured in the form of a jelly-roll by preparing a first electrode 21, a second electrode 22, and a separator 28 that extend in the longitudinal direction with a predetermined width as shown in FIG. 2, and forming a stack by sequentially stacking the first electrode 21, the separator 28, the second electrode 22, and the separator 28 as shown in FIG. 3, and then winding the stack around a winding axis as shown in FIG. 4.

The first electrode 21 may be a positive electrode, and the second electrode 22 may be a negative electrode. Of course, the opposite may also be true.

The first electrode 21 and the second electrode 22 are manufactured in the form of sheets. The electrode sheet is manufactured in the form of an active material layer 24 being applied to the surface of a metal foil 23. The electrode sheet has a coated portion 25 where an active material layer 24 is applied, and an uncoated portion 26 where an active material layer 24 is not applied. The positive electrode sheet has an uncoated portion 26 on one side in the width direction, and the negative electrode sheet has an uncoated portion 26 on the other side in the width direction.

The uncoated portion 26 is exposed or protrudes from the stack in the width direction. The uncoated portion 26 itself functions as an electrode tab 27.

The uncoated portion 26 may be notched at predetermined intervals to form notching tabs 27 in the shape of flags.

In the embodiment, it is illustrated that the notching tabs 27 have an equilateral trapezoidal shape. However, their shapes may be various shapes such as a semicircle, a semi-ellipse, a triangle, a rectangle, a parallelogram, and the like.

Additionally, the embodiment shows that the notching tabs 27 arranged along the longitudinal direction have the same width. However, the width of the notching tabs may increase gradually or stepwise from the core side to the outer circumferential side.

Additionally, the embodiment shows that the height of the notching tabs 27 increases stepwise from the core side to the outer circumferential side. However, the height of these notching tabs may be implemented in a constant or gradually decreasing form.

Additionally, the embodiment shows a structure in which the notching tabs 27 are deleted in a predetermined section of the central end of the uncoated portion 26 and a predetermined section of the centrifugal end of the uncoated portion 26. However, it is obvious that the notching tabs may not be deleted at the central end of the uncoated portion, and the notching tabs may not be deleted at the centrifugal end of the uncoated portion.

In the jelly-roll type electrode assembly 20, the notching tab 27 may be bent radially to be flattened as shown in FIG. 4. The notching tab 27 may be bent radially inward or outward. The embodiment shows a structure in which the notching tab 27 is bent radially inward.

The notching tab 27 may be bent one by one during the process of forming a jelly-roll type electrode assembly 20 by winding the stack. Alternatively, the notching tab 27 may be bent all at once after the stack is wound to form a jelly-roll type electrode assembly.

The notching tabs 27 of the first electrode 21 and the notching tabs 27 of the second electrode 22 that are bent radially and overlapped in this way may each provide a plane substantially perpendicular to the axial direction at both axial ends of the electrode assembly 20.

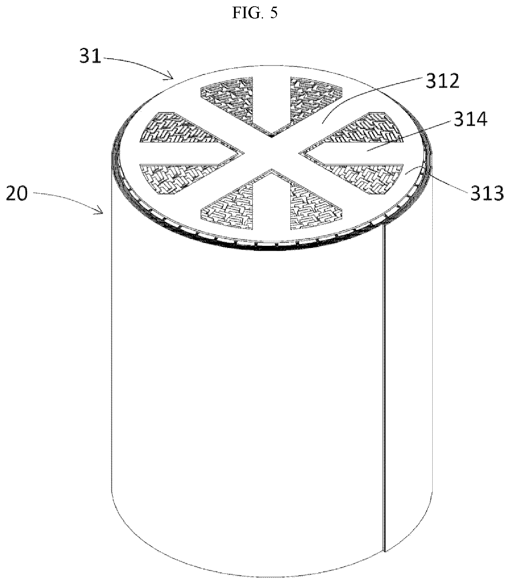

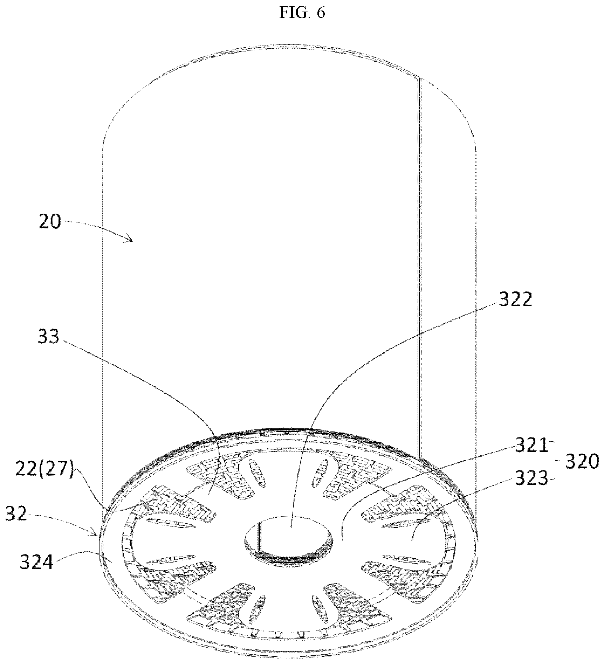

A first current collector plate 31 and a second current collector plate 32 may each be bonded to the substantially flat surface provided by bending the notching tab 27 exposed at both axial ends of the electrode assembly 20 as shown in FIGS. 5 and 6.

In the embodiment, the first current collector plate 31 is a positive electrode current collector plate and the second current collector plate 32 is a negative electrode current collector plate. The first current collector plate 31 may be made of aluminum and the second current collector plate 32 may be made of copper.

The current collector plates 31, 32 may be manufactured by punching, trimming, piercing, and bending a metal sheet.

Referring to FIG. 5, the first current collector plate 31 has a terminal connection portion 312 extending radially from the center, a ring portion 313 connecting the centrifugal edge of the terminal connection portion 312 in a circumferential direction, and an electrode connection portion 314 that extends centripetally from the ring portion 313 and is not connected to the terminal connection portion 312. The center of the terminal connection portion 312 covers at least a portion of the core hollow portion of the electrode assembly 20.

The electrode connection portion 314 is bonded to the notching tab 27 of the first electrode 21 of the electrode assembly 20 by a method such as laser welding or the like before placing the electrode assembly 20 in the can 10. The welding line of the laser may extend radially.

Referring to FIGS. 6 to 10, the second current collector plate 32 includes a body portion 320 connected to the electrode tab 27 of the electrode assembly 20 and an outer ringshaped can connection portion 324 disposed radially further outward than the body portion 320 and surrounding the edge of the second current collector plate 32. The can connection portion 324 is disposed radially spaced apart from the body portion 320.

The second current collector plate 32 includes a bridge 33 whose radial inner side is connected to the body portion 320 and whose radial outer side is connected to the can connection portion 324.

The body portion 320 includes an inner ring portion 321 that defines a hole 322 corresponding to the core hollow portion of the electrode assembly 20 and is provided in a form surrounding the core hollow portion, and an electrode tab connection portion 323 that extends radially from the inner ring portion 321. The body portion 320 may be welded and electrically connected to the electrode tab 27 of the electrode assembly 20 by a laser irradiated onto the electrode tab connection portion 323.

The electrode tab connection portion 323 may be bonded to the notching tab 27 of the second electrode 22 of the electrode assembly 20 by a method such as laser welding or the like before placing the electrode assembly 20 in the can 10. The welding line of the laser may extend radially.

The can connection portion 324 is electrically connected to the body portion 320 through the bridge 33 extending radially.

The can connection portion 324 has a radial extension portion 3242 extending radially, a bending portion 327 provided at a centrifugal end of the radial extension portion 3242, and an axial extension portion 3241 extending axially outward from the bending portion 327.

The bridge 33 may be disposed alternately with the electrode tab connection portion 323 in a circumferential direction. The bridge 33 may be connected to the inner ring portion 321.

The bridge 33 includes an inner bridge portion 333 whose radial inner side is connected to the body portion 320 and that extends radially outward from the body portion 320. At the radial outer end of the inner bridge portion 333, a first bending portion 331 for bending the inner bridge portion 333 is provided so that the extension direction of the inner bridge portion 333 extending radially outward faces axially outward.

The bridge 33 includes an outer bridge portion 335 whose radial outer side is connected to the can connection portion 324 and that extends radially inward from the can connection portion 324. At the radial inner end of the outer bridge portion 335, a second bending portion 332 for bending the outer bridge portion 335 is provided so that the extension direction of the outer bridge portion 335 extending radially inward faces axially inward.

Between the first bending portion 331 and the second bending portion 332, an offset bridge portion 334 whose radial inner side is connected to the first bending portion 331 and whose radial outer side is connected to the second bending portion 332 is provided. The offset bridge portion 334 extends axially outward as it extends radially outward. Accordingly, the second bending portion 332 is disposed radially further outward and axially further outward than the first bending portion 331.

The bending angle b1 of the first bending portion may be an acute angle, and the bending angle b2 of the second bending portion may be an acute angle. The difference between the two bending angles may be 10 degrees or less.

The inner bridge portion 333 may extend substantially parallel to the radial direction.

An angle formed by the extension direction of the outer bridge portion 335 and the radial direction may be 10 degrees or less. Preferably, the outer bridge portion 335 may extend substantially parallel to the radial direction.

By the first bending portion 331, the can connection portion 324, the outer bridge portion 335, and the offset bridge portion 334 may be disposed axially further outward than the inner bridge portion 333 and the body portion 320.

By the second bending portion 332, the can connection portion 324 and the outer bridge portion 335 may be disposed axially further outward than the inner bridge portion 333 and the body portion 320.

As such, the bridge 33 of the second current collector plate 32 of the present disclosure may have the offset bridge portion 334, so that the outer bridge portion 335 positioned further outward than the inner bridge portion 333 along the radial direction may be spaced upward from the electrode assembly 20. Therefore, in the case where the can connection portion 324 and the can 10 are bonded by a thermal bonding method such as welding, for example, even if a large amount of heat is transferred to the inner bridge portion 333, which is located relatively closer in distance from the can connection portion 324 compared to the outer bridge portion 335, the concern about damage to the electrode assembly 20 by this heat may be greatly reduced.

By the first bending portion 331 and the second bending portion 332, the bridge 33 may be easily elastically deformed in the radial direction.

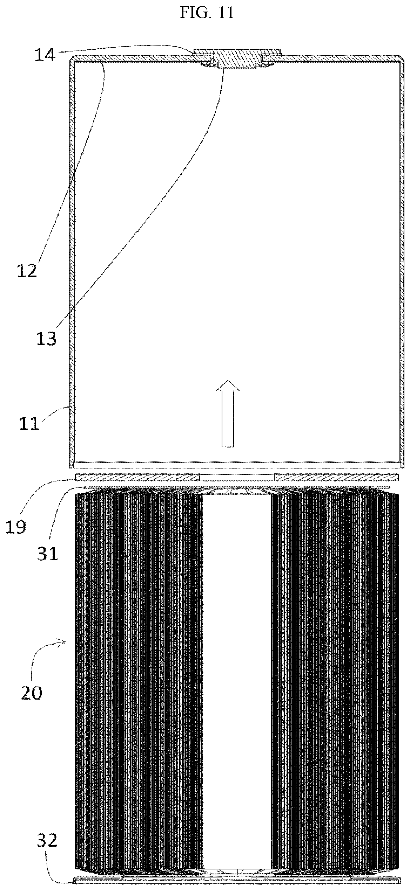

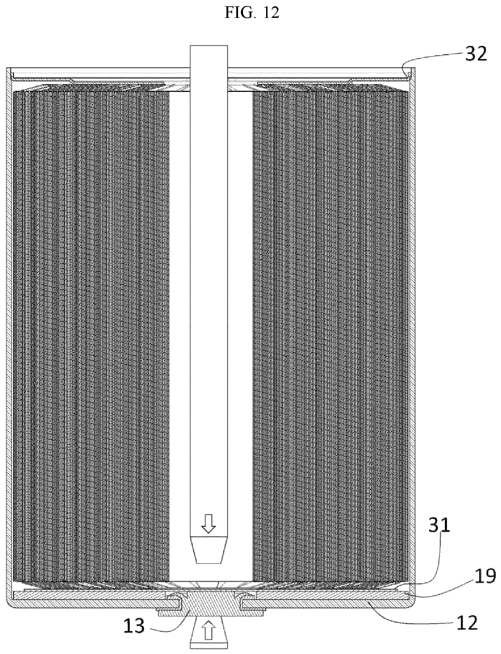

As shown in FIGS. 11 and 12, the electrode assembly 20 is accommodated in the can 10 in a state where the first current collector plate 31 is aligned toward the bottom member 12 of the can 10. At this time, an insulator 19 is interposed between the first current collector plate 31 and the bottom member 12 of the can 10 to electrically insulate the first current collector plate 31 from the bottom member 12.

And, the terminal connection portion 312 of the first current collector plate 31 is bonded to the first electrode terminal 13 fixed to the can 10 by means of resistance welding, ultrasonic welding, laser welding, or the like. A welding device for welding the first current collector plate 31 and the first electrode terminal 13 may approach the back surface of the center of the terminal connection portion 312 of the first current collector plate 31 through the core hollow portion of the electrode assembly 20 from the open end of the can 10 and proceed with welding. Of course, in addition to this, the first current collector plate 31 and the first electrode terminal 13 may also be bonded by means of brazing, soldering, or the like. That is, the first current collector plate 31 and the first electrode terminal 13 may be coupled to each other in various ways as long as they may be electrically connected and fixed to each other.

In a state where the electrode assembly 20 is accommodated inside the can 10, the electrode tab 27 of the second electrode 22 and the second current collector plate 32 are disposed to face the open end of the side wall member 11. And, the outer circumferential surface of the second current collector plate 32 is in contact with the inner surface of the side wall member 11 and is press-fitted into it.

When the center of the second current collector plate 32 is not exactly aligned with the center of the electrode assembly 20 in a state where the second current collector plate 32 is bonded to the electrode assembly 20 as shown in FIG. 6, the inner circumferential surface of the can 10 and the outer circumferential surface of the second current collector plate 32 may not be concentrically aligned during the process of axially inserting the electrode assembly 20 into the can 10 as shown in FIG. 11.

Additionally, even if the center of the second current collector plate 32 is exactly aligned with the center of the electrode assembly 20, if the center of the can 10 and the center of the electrode assembly 20 are not aligned during the process of axially inserting the electrode assembly 20 into the can 10 as shown in FIG. 11, the inner circumferential surface of the can 10 and the outer circumferential surface of the second current collector plate 32 may not be concentrically aligned.

At this time, if the second current collector plate 32 is a rigid body that is not elastically deformed, the external force generated by the eccentricity of the inner circumferential surface of the can 10 and the outer circumferential surface of the second current collector plate 32 applies a load to the welding portion of the second current collector plate 32 and the electrode tab 27 of the electrode assembly 20.

On the other hand, if the bridge 33, such as the second current collector plate 32 of the present disclosure, has the first bending portion 331 and the second bending portion 332 to facilitate elastic deformation in the radial direction, even if the outer circumferential surface of the second current collector plate 32 is eccentric with the inner circumferential surface of the can 10, most of the load generated due to this is absorbed by the elastic deformation of the bridge 33, and almost no load is applied to the welding portion of the second current collector plate 32 and the electrode tab 27 of the electrode assembly 20.

As such, the first bending portion 331 and the second bending portion 332 of the bridge 33 protect the welding portion between the second current collector plate 32 and the electrode assembly 20 during the process of press-fitting the second current collector plate 32 into the can 10.

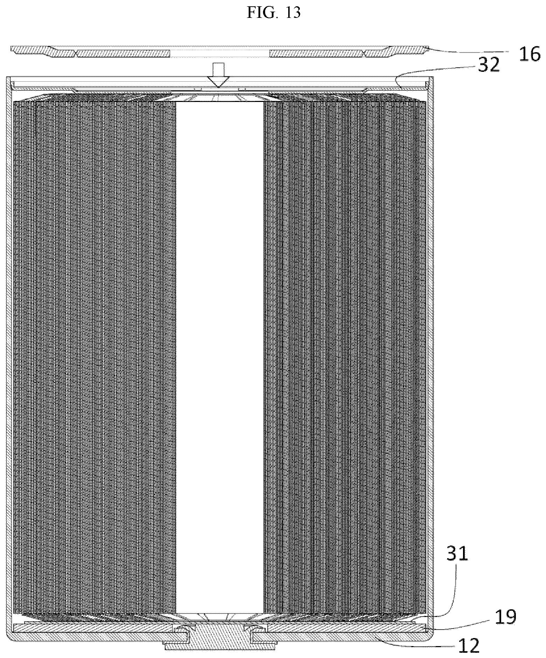

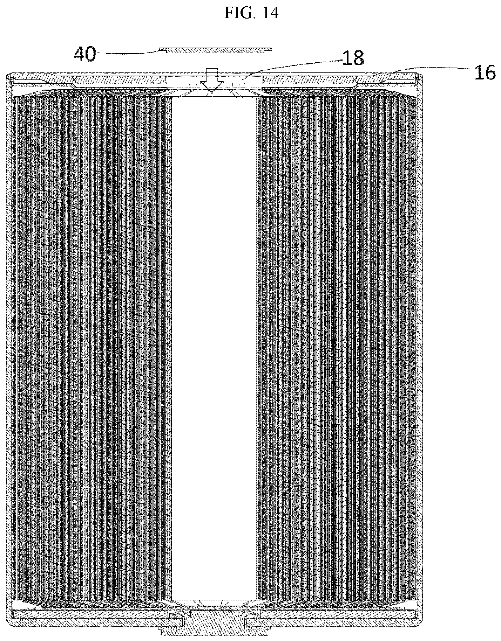

After the first current collector plate 31 and the first electrode terminal 13 are bonded, the open end of the side wall member 11 is covered by a cap 16 as shown in FIGS. 13 and 14 and is closed through seam welding or the like. Then, an electrolyte may be injected into the can 10 through an injection port 18 provided in the center of the cap 16.

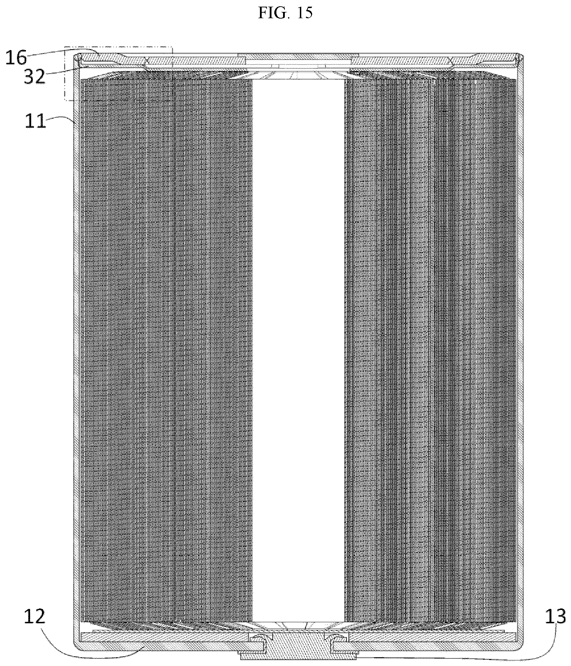

After the electrolyte is injected, the injection port 18 may be closed by a stopper 40 as shown in FIGS. 14 and 15.

Of course, the welding structure of the present disclosure may also be applied to a cap without an injection port. According to this, before covering the open end of the side wall member 11 with the cap 16, the electrolyte may be injected first, and after the injection of the electrolyte is completed, the open end may be covered with the cap 16 to finish.

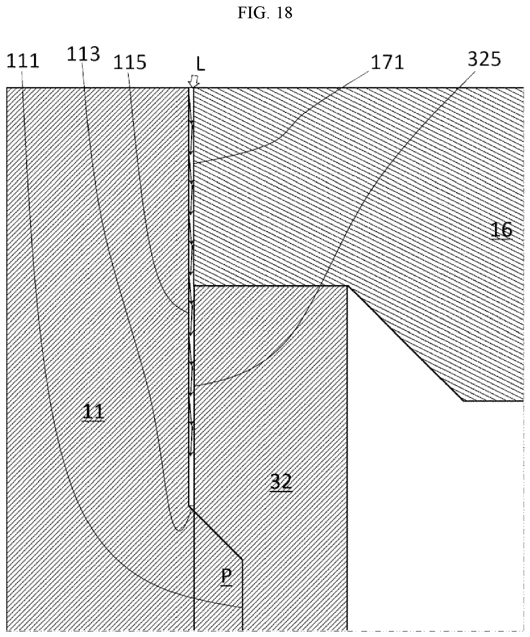

The edge of the cap 16 is bonded to the edge of the side wall member 11 by seam welding with a laser L as shown in FIG. 18, whereby the can 10 may be sealed.

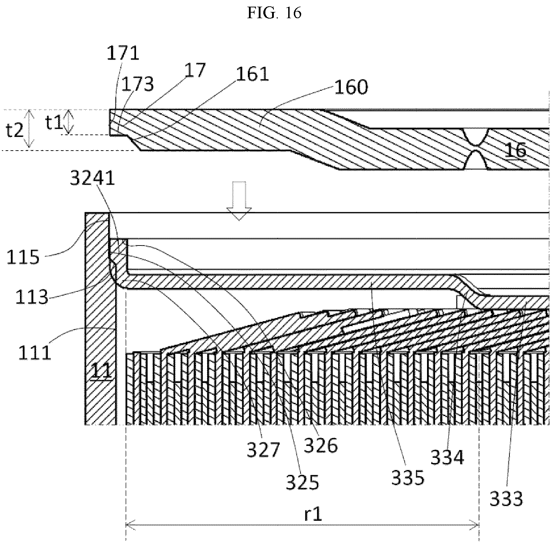

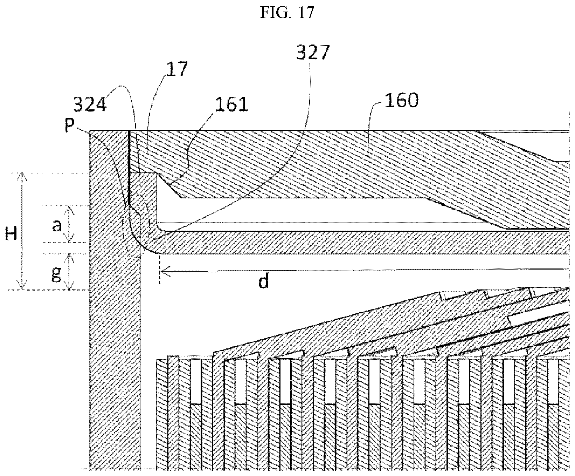

Referring to FIGS. 16 and 17, the side wall member 11 has an inner diameter expansion portion 113 at the open end side. The inner diameter expansion portion 113 has the shape of an inclined surface provided on the inner circumferential surface of the side wall member 11 to expand the inner diameter of the side wall member 11 toward the axial outer side. That is, the inner diameter expansion portion 113 includes an inclined surface provided on the inner surface of the side wall member 11 and extending radially outward toward the axial outer side.

Accordingly, the inner circumferential surface of the side wall member 11 may include a first inner circumferential surface 111 provided axially further inward than the inner diameter expansion portion 113 and a second inner circumferential surface 115 provided axially further outward than the inner diameter expansion portion 113.

While the diameter of the outer circumferential surface of the side wall member 11 is uniform along the axial direction, the second inner circumferential surface 115 may have a larger inner diameter than the first inner circumferential surface 111. Accordingly, the side wall member 11 may have a thickness measured radially at a part where the second inner circumferential surface 115 is provided, smaller than a thickness measured radially at a part where the first inner circumferential surface 111 is provided.

The can connection portion 324 provided on the edge of the second current collector plate 32 and electrically connected to the can 10 includes a first part facing or contacting the inner circumferential surfaces 111, 113, 115 of the side wall member 11. The first part is provided with an abutting outer circumferential surface 325 facing or contacting the inner circumferential surfaces 111, 113, 115 of the side wall member 11 in the radial direction.

The can connection portion 324 includes a second part contacting the cap 16. The second part is provided with a cap abutting surface 326 axially facing and contacting the inner surface of the cap 16.

The first part and the second part are provided in the axial extension portion 3241 of the can connection portion 324.

The axial extension portion 3241 of the can connection portion 324 is connected to the axial outer side of the bending portion 327 and has a shape that extends axially outward from the bending portion 327. Accordingly, the area and axial length of the abutting outer circumferential surface 325 of the second current collector plate 32 may be further secured.

The material of the second current collector plate 32 may be softer than the material of the side wall member 11.

The thermal conductivity of the second current collector plate 32 may be higher than the thermal conductivity of the side wall member 11.

For example, the material of the second current collector plate 32 may include copper, and the material of the side wall member 11 may include iron.

An outer diameter of the abutting outer circumferential surface 325 of the can connection portion 324 is set to be larger than an inner diameter of the first inner circumferential surface 111. The outer diameter of the abutting outer circumferential surface 325 may correspond to or be smaller than an inner diameter of the second inner circumferential surface 115.

Then, in the process of inserting the second current collector plate 32, the bending portion 327 is elastically deformed and the abutting outer circumferential surface 325 is forcibly press-fitted into the first inner circumferential surface 111, so that the abutting outer circumferential surface 325 and the first inner circumferential surface 111 are in radially close contact with each other. Accordingly, as a result, the outer diameter of the first section (a) of the abutting outer circumferential surface 325 press-fitted into the first inner circumferential surface 111 in the axial direction corresponds to the inner diameter of the first inner circumferential surface 111.

The radial extension portion 3242 of the can connection portion 324 supports the outer shape of the can connection portion 324 when the bending portion 327 is elastically deformed by receiving a radial inward force.

As such, by the multi-stage inner circumferential surface structure of the side wall member 11 and the can connection portion 324 structure of the current collector plate 32, at least an axial partial section of the abutting outer circumferential surface 325 is in firmly close contact with the inner circumferential surface of the side wall member 11.

The bending portion 327 provides a curved surface whose outer diameter is gradually smaller than the outer diameter of the axial extension portion 3241 of the can connection portion 324 toward an axial inner side. And, the minimum outer diameter (d) of the curved surface measured at a lower end of the radial extension portion 3242 may be smaller than the inner diameter of the first inner circumferential surface 111. This shape guides the can connection portion 324 to be forcibly press-fitted into the first inner circumferential surface 111 during the process of inserting the second current collector plate 32 into the inner space of the side wall member 11. Therefore, the forced press-fitting process of the second current collector plate 32 may be more easily performed.

After all, according to the present disclosure, despite the dimensional tolerance of the parts, if only the relationship of the dimensions can be maintained so that the minimum outer diameter (d) of the bending portion 327 is smaller than the inner diameter of the first inner circumferential surface 111 of the side wall member 11, and the outer diameter of the bonding outer circumferential surface 171 of the second current collector plate 32 is larger than the inner diameter of the first inner circumferential surface 111, there is an effect that the first section (a) of the abutting outer circumferential surface 325 is in firmly close contact with the first inner circumferential surface 111 of the side wall member 11. In addition, such dimensional management may be easily performed. In addition, according to the present disclosure, despite assembly errors between the parts, the assembly errors are absorbed by the first bending portion 331 and the second bending portion 332 of the bridge 33.

Accordingly, the present disclosure may reliably prevent the phenomenon in which the laser L is directly irradiated into the can 10 by the forced press fit portion P through forced pressing between the can connection portion 324 of the second current collector plate 32 extending long axially, the first inner circumferential surface 111 of the side wall member 11, and the first section (a) of the abutting outer circumferential surface 325 of the second current collector plate 32, and the inner diameter expansion portion 113 of the side wall member 11, even if a portion of the laser L penetrates therein during the welding process to be described later, as shown in FIG. 18.

The cap 16 has a cap body 160, a thickness reduction portion 161, and a bonding portion 17 in order from a center to an outer side in a radial direction. That is, the thickness reduction portion 161 is provided on a radial outer side of the cap body 160, and the bonding portion 17 is provided on a radial outer side of the thickness reduction portion 161.

Accordingly, the first thickness t1 of the bonding portion 17 measured in the axial direction is smaller than the second thickness t2 of the cap body 160 measured in the axial direction.

The bonding portion 17 of the cap 16 is provided with the bonding outer circumferential surface 171 that radially faces or contacts the second inner circumferential surface 115 of the side wall member 11 very closely. Additionally, the axial inner surface of the bonding portion 17 of the cap 16 is provided with a current collector plate abutting surface 173 that axially faces and contacts the cap abutting surface 326 of the can connection portion 324 of the second current collector plate 32.

The thickness reduction portion 161 is a thickness change portion provided in the cap 16.

If at least a portion of the thickness reduction portion 161 may be allowed to contact the second current collector plate 32 by appropriately selecting the position where the thickness reduction portion 161 is provided, there is an effect of aligning the center of the cap 16 while the thickness reduction portion 161 of the cap 16 is in contact with the second current collector plate 32 during the process of inserting the cap 16.

To enhance the alignment effect, the embodiment implemented the thickness reduction portion 161 in the form of an inclined surface that extends axially outward toward a radial outer side.

In the process of inserting the cap 16 into the side wall member 11, the thickness reduction portion 161 in the form of the inclined surface may contact the radial inner edge of the cap abutting surface 326. Accordingly, the axial outer end of the can connection portion 324 of the second current collector plate 32 provided with the cap abutting surface 326 is pressed radially outward by the thickness reduction portion 161 to be disposed closer to or in closer contact with the second inner circumferential surface 115 of the side wall member 11.

That is, the thickness reduction portion 161 in the form of the inclined surface is brought into contact with the can connection portion 324 of the second current collector plate 32 during the process of inserting the cap 16 into the open end of the side wall member 11, and it may not only guide the center alignment of the cap 16 with respect to the center of the second current collector plate 32, but also have the function of pressing the axial outer end of the can connection portion 324 of the second current collector plate 32 radially outward to bring the axial outer end of the can connection portion 324 of the second current collector plate 32 into close contact with the second inner circumferential surface 115 of the side wall member 11.

In a state where the cap 16 is inserted into the open end of the side wall member 11, the bonding outer circumferential surface 171 of the cap 16 and the abutting outer circumferential surface 325 of the second current collector plate 32 each radially face or contact the second inner circumferential surface 115 of the side wall member 11 very closely. In other words, the bonding outer circumferential surface 171 of the cap 16 may radially face or contact the second inner circumferential surface 115, and the abutting outer circumferential surface 325 of the can connection portion 324 may radially face or contact the second inner circumferential surface 115 axially further inward than the bonding outer circumferential surface 171.

And, in the axial direction, the cap abutting surface 326 provided on the axial outer end surface of the can connection portion 324 of the second current collector plate 32 is in contact with the current collector plate abutting surface 173 provided on the inner surface of the bonding portion 17 of the cap 16.

According to this assembly structure, the insertion depth of the cap 16 may be precisely regulated by the height H of the second current collector plate 32, which may be influenced by the axial extension length of the can connection portion 324.

Meanwhile, even if there is a slight error in the outer diameter dimension of the bonding outer circumferential surface 171 of the cap 16, the inner diameter dimension of the second inner circumferential surface 115 of the side wall member 11, and the outer diameter dimension of the abutting outer circumferential surface 325 of the second current collector plate 32, which may not allow the bonding outer circumferential surface 171 of the cap 16 and the abutting outer circumferential surface 325 of the second current collector plate 32 to be in close contact with the second inner circumferential surface 115 of the side wall member 11, there is no concern at all that the laser L irradiated for welding will penetrate into the can 10 due to the structure of the forced press fit portion P and the inner diameter expansion portion 113 as shown in FIG. 18.

In the battery cell, a welding portion W in which the second inner circumferential surface 115 part of the side wall member 11, the bonding outer circumferential surface 171 part of the cap 16, and the axial extension portion 3241 part of the can connection portion 324 of the second current collector plate 32 are welded together is formed at an abutting part between the side wall member 11, the cap 16, and the second current collector plate 32.

As shown, the bonding outer circumferential surface 171 of the cap 16 and the axial end of the inner circumferential surface of the side wall member 11, which radially abuts on each other, are exposed to the axial outer side.

The welding portion W is formed by a laser irradiated from the axial outer side of the battery cell onto the bonding outer circumferential surface 171 of the cap 16 and the axial end of the second inner circumferential surface 115 of the side wall member 11.

At this time, since the abutting outer circumferential surface 325 of the second current collector plate 32 positioned axially further inward than the cap 16 faces and contacts the inner circumferential surface of the side wall member 11, the laser is prevented from being irradiated into the inner space of the can through the gap between the side wall member 11 and the cap 16.

Additionally, the inner diameter expansion portion 113 of the side wall member 11 also blocks internal penetration of the laser, which may be irradiated through the gap between the side wall member 11 and the cap 16 or the second current collector plate 32.

The welding portion W includes a part where at least a portion of the inner circumferential surface of the side wall member 11 and at least a portion of the abutting outer circumferential surface 325 of the current collector plate 32 are bonded, a part where at least a portion of the inner circumferential surface of the side wall member 11 and at least a portion of the bonding outer circumferential surface 171 of the cap 16 are bonded, and a part where at least a part of the cap abutting surface 326 of the current collector plate 32 and at least a part of the current collector plate abutting surface 173 of the cap 16 are bonded. Preferably, the bonding outer circumferential surface 171 of the cap 16 may be entirely welded.

That is, the welding portion W may be formed by triple welding.

The abutting part of the side wall member 11 and the cap 16 is heated to a high temperature by the laser L irradiated to form the welding portion W.

Then, the heat generated in the side wall member 11 by the laser may be quickly dispersed and conducted through the second current collector plate 32 having a wider contact area, and the heat generated in the cap 16 by the laser may be somewhat more slowly dispersed and conducted through the second current collector plate 32 having a narrower contact area. Accordingly, the melting point of the side wall member 11, which is relatively thinner than the bonding portion 17 of the cap 16, may be further delayed.

Additionally, since most of the welding heat transferred through the side wall member 11 is dispersed through the second current collector plate 32, the phenomenon of heat transfer toward the separator 28 of the electrode assembly 20 in contact with the first inner circumferential surface 111 of the side wall member 11 may be further reduced.

According to the present disclosure, by the first bending portion 331 and the second bending portion 332 provided in the bridge 33 of the second current collector plate 32, the can connection portion 324 and the outer bridge portion 335 of the second current collector plate 32 are axially spaced apart from the electrode assembly 20 by a predetermined distance (g), as shown in FIG. 17. Additionally, as shown in FIG. 16, the second current collector plate 32 is axially spaced apart from the electrode assembly 20 by a predetermined radial width r1 radially inward from the can connection portion 324 by the first bending portion 331.

Accordingly, the welding heat transferred to the second current collector plate 32 in the process of welding the cap 16, the can 10, and the second current collector plate 32 is conducted radially inward through the bridge 33 by a predetermined distance r1 and then reaches the surface of the electrode tab 27 of the electrode assembly 20. If the heat conduction path is set to be long in this way, the temperature drops considerably during the heat conduction process. Therefore, the heat conducted to the inner bridge portion 333 or the body portion 320 has little effect on the electrode assembly 20.

Meanwhile, as described above, in the cap 16, the first thickness t1 of the bonding portion 17 is smaller than the second thickness t2 of the cap body 160 measured axially. Accordingly, the depth at which the cap 16 should be welded to the side wall member 11 is determined by the first thickness t1, and the resistance to the bulging phenomenon of the cap 16 caused by an increase in internal pressure of the can 10 due to thermal runaway of the battery cell or the like is determined by the second thickness t2.

According to the present disclosure, even if welding is performed between the cap 16 and the side wall member 11 to a depth of the first thickness t1, the abutting part of the cap 16 and the side wall member 11 is completely bonded and connected, so that no part where stress is concentrated in the event of bulging occurs, and the cap body 160 is formed of a thicker second thickness t2, thereby allowing to have a greater resistance to bulging.

Additionally, according to the present disclosure, since the thickness reduction portion 161 of the cap 16 for interaction with the can connection portion 324 during the assembly process is positioned radially inward from the bonding outer circumferential surface 171 only to an extent corresponding to the radial thickness of the can connection portion 324, the area of the cap body 160 with the second thickness t2 may be secured more widely, thereby further increasing the resistance to bulging. It will be appreciated that the thickness reduction portion 161 may be positioned very close to the radial outer edge of the cap 16 in that a current collector plate such as the second current collector plate 32 is typically manufactured by a molding process in which a thin metal sheet is pressed with a press.

According to the above-described embodiment, despite the wide range of the welding process, weldability may be improved by securing sealing force without perforation or leakage, process stability may be improved by preventing thermal damage to the components or separator of the cell due to the welding heat, and durability may be improved by securing dimensional stability or bulging resistance through suppressing dimensional deformation according to internal pressure.

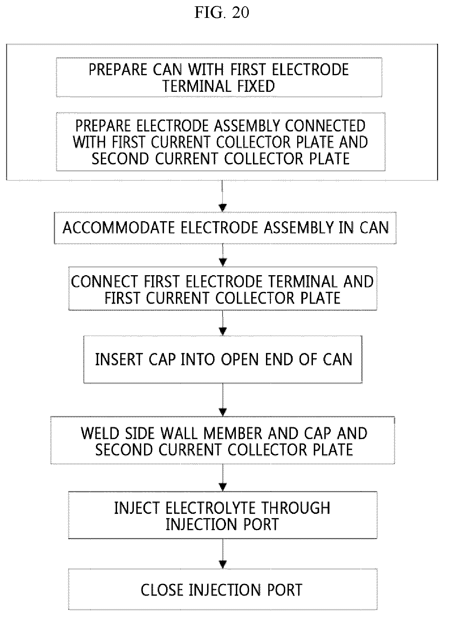

Hereinafter, with reference to FIGS. 11 to 15 and FIG. 20, a first embodiment of the battery cell manufacturing method described above will be described.

According to the battery cell manufacturing method, first, a can 10 having a first electrode terminal 13 fixed to a bottom member 12 is prepared, and an electrode assembly 20 having a first current collector plate 31 and a second current collector plate 32 each bonded to both axial ends is prepared.

And, the first current collector plate 31 is directed toward the bottom member 12, and the electrode assembly 20 is inserted and accommodated in the can 10. Then, the second current collector plate 32 is positioned at the open end of the can 10. In the process of accommodating the electrode assembly 20 in the can 10, the abutting outer circumferential surface 325 of the can connection portion 324 provided on the radial outer edge of the second current collector plate 32 is brought into contact with the first inner circumferential surface 111 of the side wall member 11.

Next, the first current collector plate 31 and the first electrode terminal 13 are bonded.

And, the open end of the side wall member 11 is covered with a cap 16, and the bonding outer circumferential surface 171 and the current collector plate abutting surface 173 provided on the edge of the cap 16 are brought into contact with the second inner circumferential surface 115 of the side wall member 11 and the cap abutting surface 326 of the second current collector plate 32, respectively.

At this time, the thickness reduction portion 161 in the form of an inclined surface provided on the axial inner surface of the cap 16 may be brought into contact with the second current collector plate 32, thereby aligning the center of the cap 16 and pressing the axial outer end of the can connection portion 324 radially outward to contact the second inner circumferential surface 115.

Next, a laser is irradiated from the axial outer side axially to an abutting part of the second inner circumferential surface 115 of the side wall member 11 and the bonding outer circumferential surface 171 of the cap 16 to triple-weld the inner circumferential surface of the side wall member 11, the bonding portion 17 of the cap 16, and the can connection portion 324 of the second current collector plate 32 together. The welding portion W thus formed bonds all of the side wall member 11, the cap 16, and the second current collector plate 32.

Next, an electrolyte is injected into the can 10 through the injection port 18 of the cap 16. After the electrolyte injection is completed, the injection port 18 is sealed with a stopper 40. The sealing finish of the injection port 18 may be accomplished, for example, by welding. However, such a sealing finish may be achieved by applying various known techniques capable of sealing bonding.

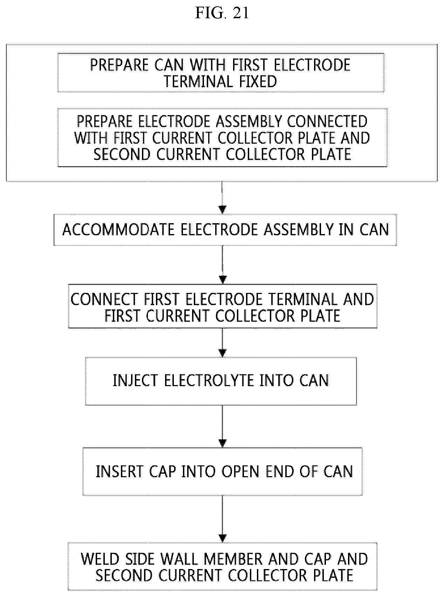

Referring to FIG. 21, a second embodiment of the battery cell manufacturing method is described. The manufacturing method of the second embodiment may be applied when a cap without an injection port is used.

First, a can 10 having a first electrode terminal 13 fixed to a bottom member 12 is prepared, and an electrode assembly 20 having a first current collector plate 31 and a second current collector plate 32 each bonded to both axial ends is prepared.

And, the first current collector plate 31 is directed toward the bottom member 12, and the electrode assembly 20 is inserted and accommodated in the can 10. Then, the second current collector plate 32 is positioned at the open end of the can 10. In the process of accommodating the electrode assembly 20 in the can 10, the abutting outer circumferential surface 325 of the can connection portion 324 provided on the radial outer edge of the second current collector plate 32 is brought into contact with the first inner circumferential surface 111 of the side wall member 11.

Next, the first current collector plate 31 and the first electrode terminal 13 are bonded.

And, before covering the open end of the side wall member 11 with the cap 16, an electrolyte is injected into the can 10.

After the electrolyte injection is completed, the open end of the side wall member 11 is covered with the cap 16, and the bonding outer circumferential surface 171 and the current collector plate abutting surface 173 provided on the edge of the cap 16 are brought into contact with the second inner circumferential surface 115 of the side wall member 11 and the cap abutting surface 326 of the second current collector plate 32, respectively.

Next, a laser is irradiated from the axial outer side axially to an abutting part of the second inner circumferential surface 115 of the side wall member 11 and the bonding outer circumferential surface 171 of the cap 16 to triple-weld the inner circumferential surface of the side wall member 11, the bonding portion 17 of the cap 16, and the can connection portion 324 of the second current collector plate 32 together. The welding portion W thus formed bonds all of the side wall member 11, the cap 16, and the second current collector plate 32.

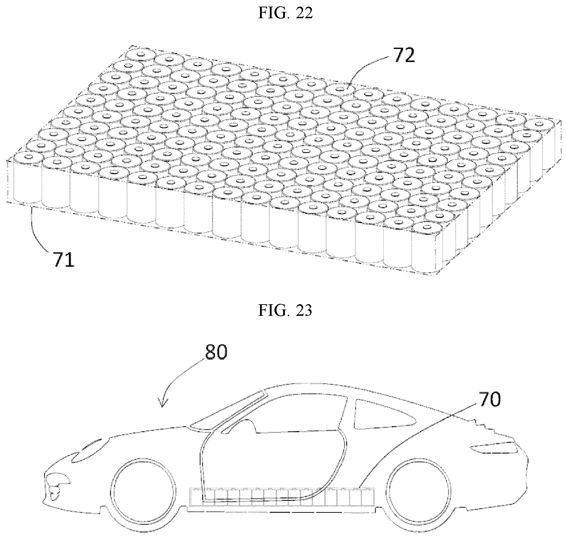

The battery cell 72 manufactured through the welding structure and welding process described above may be accommodated in the housing 71 of the battery pack 70, as shown in FIG. 22. The battery pack 70 may be configured using a battery module that is an intermediate form of assembly, or the battery pack 70 may be configured directly without the battery module as shown.

Since the battery cell 72 described above itself has a large volume, there is no particular difficulty in implementing the battery pack 70 even without using an intermediate structure called a battery module. And, the battery cell 72 has low internal resistance and higher energy density. Accordingly, the energy density of the battery pack 70 including the battery cell 72 may be implemented even higher.

The battery pack 70 with the increased energy density in this way may store the same energy while reducing the volume and load thereof. Therefore, if the battery pack 70 to which these battery cells 72 are applied is mounted on a vehicle such as the vehicle 80 using electricity as an energy source as shown in FIG. 23, the mileage of the vehicle per unit of energy may be further expanded.

It should be understood that the above-described embodiments are exemplary and not limiting in all respects, and the scope of the present disclosure will be indicated by the claims to be described later rather than the detailed description described above. And, the meaning and scope of the claims to be described later, as well as all changes and modifications derived from the equivalent concepts, should be interpreted as being included in the scope of the present disclosure.

The present disclosure has been described hereinabove with reference to the illustrated drawings, but it is apparent that the present disclosure is not limited by the embodiments and drawings disclosed in this specification and various modifications may be made by those skilled in the art within the scope of the technical ideas of the present disclosure. In addition, even if the effects according to the configuration of the present disclosure have not been explicitly described in the foregoing description of the embodiments of the present disclosure, it is obvious that the effects to be predicted by the corresponding configuration should also be recognized.

### [Explanation of Reference Signs]

10: can
11: side wall member
111: first inner circumferential surface
113: inner diameter expansion portion
115: second inner circumferential surface (bonding inner circumferential surface)
12: bottom member
13: first electrode terminal (positive electrode terminal)
14: gasket
15: second electrode terminal
16: cap
160: cap body
t1: second thickness
161: thickness reduction portion
17: bonding portion
t2: first thickness
171: bonding outer circumferential surface
173: current collector plate abutting surface
18: injection port
19: insulator
20: electrode assembly
21: first electrode
22: second electrode
23: metal foil
24: active material layer
25: coated portion
26: uncoated portion
27: electrode tab (notching tab)
28: separator
31: first current collector plate (positive electrode current collector plate)
312: terminal connection portion
313: ring portion
314: electrode connection portion
32: second current collector plate (negative electrode current collector plate)
320: body portion
321: inner ring portion
322: hole
323: electrode tab connection portion
324: can connection portion
3241: axial extension portion
3242: radial extension portion
a: first section
325: abutting outer circumferential surface
326: cap abutting surface
327: bending portion
d: diameter
33: bridge
331: first bending portion
332: second bending portion
b1, b2: bending angle
333: inner bridge portion
334: offset bridge portion
335: outer bridge portion
40: stopper
H: height of second current collector plate
g: axial spacing
r1: radial width
P: forced press fit portion
W: welding portion
70: battery pack
71: housing
72: battery cell
80: vehicle

## Claims

1. A battery cell comprising a can comprising a side wall member extending axially; and an open end provided at one axial end of the side wall member, a cap covering the open end, an electrode assembly accommodated inside the can, and a current collector plate electrically connecting the electrode assembly and the can,
wherein the current collector plate comprises:
a body portion connected to an electrode tab of the electrode assembly;
a can connection portion that is disposed radially further outward than the body portion and is connected to at least one of the side wall member and the cap; and
a bridge whose radial inner side is connected to the body portion and whose radial outer side is connected to the can connection portion, and which extends radially,
wherein the bridge comprises:
a first bending portion bent so that an extension direction of the bridge portion extending radially outward is directed to an axial outer side;
a second bending portion bent so that an extension direction of the bridge portion extending axially outward is directed to a radial outer side; and
an offset bridge portion whose radial inner side is connected to the first bending portion and whose radial outer side is connected to the second bending portion.

2. The battery cell according to claim 1,
wherein the body portion is disposed axially further inward than the can connection portion.

3. The battery cell according to claim 1,
wherein the bridge further comprises an inner bridge portion whose radial inner side is connected to the body portion and whose radial outer side is connected to the first bending portion.

4. The battery cell according to claim 1,
wherein the bridge further comprises an outer bridge portion whose radial inner side is connected to the second bending portion and whose radial outer side is connected to the can connection portion.

5. The battery cell according to claim 4,
wherein an angle formed by an extension direction of the outer bridge portion and a radial direction is 10 degrees or less.

6. The battery cell according to claim 1,
wherein a bending angle of the first bending portion is an acute angle.

7. The battery cell according to claim 1,
wherein a bending angle of the second bending portion is an acute angle.

8. The battery cell according to claim 1,
wherein a difference between the bending angle of the first bending portion and the bending angle of the second bending portion is 10 degrees or less.

9. The battery cell according to claim 1,
wherein one axial end of the side wall member is provided with:
an inner diameter expansion portion in which an inner diameter of the side wall member is expanded;
a first inner circumferential surface provided on an axial inner side of the inner diameter expansion portion; and
a second inner circumferential surface provided on an axial outer side of the inner diameter expansion portion and having a larger inner diameter than the first inner circumferential surface.

10. The battery cell according to claim 9,
wherein an outer circumference of the can connection portion of the current collector plate is in contact with the first inner circumferential surface.

11. The battery cell according to claim 9,
wherein an outer circumference of the cap is in contact with the second inner circumferential surface.

12. The battery cell according to claim 1,
wherein the can connection portion comprises:
an abutting outer circumferential surface that is defined by the outer circumference of the can connection portion, radially faces an inner circumferential surface of the side wall member, and has axially at least a portion thereof radially facing and contacting an inner circumferential surface of the side wall member; and
a cap abutting surface that is defined by an axial outer end of the can connection portion and axially faces and contacts an inner surface of the cap.

13. The battery cell according to claim 1,
wherein the cap comprises:
a bonding outer circumferential surface that radially faces an inner circumferential surface of the side wall member; and
a current collector plate abutting surface that is defined by an axial inner surface of the cap and axially faces and contacts the can connection portion of the current collector plate.

14. The battery cell according to claim 1,
wherein at least a portion of the side wall member, at least a portion of the cap, and at least a portion of the can connection portion of the current collector plate are welded together and bonded.

15. The battery cell according to claim 12,
wherein a part where the inner circumferential surface of the side wall member and the abutting outer circumferential surface are in contact includes a part where the abutting outer circumferential surface is forcibly press-fitted into the side wall member as an outer diameter of the abutting outer circumferential surface is larger than an inner diameter of the inner circumferential surface of the side wall member.

16. The battery cell according to claim 1,
wherein at an axial inner end of the can connection portion, a bending portion bent to allow the can connection portion extending radially outward to extend axially outward is provided.

17. The battery cell according to claim 1,
wherein the cap has a pressing surface that contacts the current collector plate and presses the current collector plate radially outward.

18. The battery cell according to claim 17,
wherein the pressing surface comprises an inclined surface provided on an axial inner surface of the cap and extending axially outward toward a radial outer side.

19. A method for manufacturing a battery cell comprising a can comprising a side wall member extending axially; and an open end provided at one axial end of the side wall member, a cap covering the open end, and an electrode assembly accommodated inside the can, the method comprising:
a first step of bonding a current collector plate to the electrode assembly;
a second step of inserting the current collector plate into the can and forcibly pressfitting at least an axial portion of an abutting outer circumferential surface of a can connection portion provided on a radial outer edge of the current collector plate into an inner circumferential surface of the side wall member;
a third step of covering an open end of the side wall member with a cap and bringing a radial outer edge of the cap into contact with at least one of the side wall member and the can connection portion of the current collector plate; and
a fourth step of welding the side wall member, the cap, and the can connection portion of the current collector plate together by irradiating a laser to the side wall member, the cap, and the can connection portion of the current collector plate.
